# EUROPÄISCHE PATENTANMELDUNG

(11) **EP 4 050 085 A1**
(43) Veröffentlichungstag der Anmeldung: **31.08.2022**
(21) Anmeldenummer: 21159726.5
(22) Anmeldetag: 26.02.2021
(51) Int. Cl.: C10B 49/10, C10B 53/07, C09C 1/48, C08K 3/04, B60C 1/00, B29B 7/74

(54) **VERFAHREN ZUR HERSTELLUNG VON RUSS AUS ABFÄLLEN, RUSS HERGESTELLT NACH DEM VERFAHREN, VERFAHREN ZUR HERSTELLUNG EINER KAUTSCHUKMISCHUNG, SOWIE KAUTSCHUKMISCHUNG ENTHALTEND DEN RUSS SOWIE FAHRZEUGREIFEN**

(71) Anmelder: Continental Reifen Deutschland GmbH, 30165 Hannover (DE)
(72) Erfinder: Burkhart, Alexander, 30419 Hannover (DE); Liu, Fei, 30419 Hannover (DE); Recker, Carla, 30419 Hannover (DE); Soetbeer, Inga, 30419 Hannover (DE); Ramani, Balan, 7522 Enschede (NL); Anjum, Arqam, 7522 Enschede (NL); Bramer, Eddy, 7522 Enschede (NL); Brem, Gerrit, 7522 Enschede (NL); Dierkes, Wilma, 7522 Enschede (NL)
(74) Vertreter: Continental Corporation

(57) **Zusammenfassung**

Die Erfindung betrifft ein Verfahren zur Herstellung von Ruß aus Abfällen, einen Ruß, der nach dem Verfahren hergestellt ist, ein Verfahren zur Herstellung einer Kautschukmischung, eine Kautschukmischung enthaltend den Ruß sowie einen Fahrzeugreifen.

Erfindungsgemäß umfasst das Verfahren wenigstens die folgenden Verfahrensschritte:
A) Bereitstellung von Abfällen;
B) Zerkleinerung der Abfälle, wodurch Abfallpartikel erhalten werden;
C) Überführung der Abfallpartikel in einen Flugstromreaktor ("entrained flow reactor");
D) Pyrolyse der Abfallpartikel während der Verweilzeit der Abfallpartikel im Flugstromreaktor, wobei die Abfallpartikel durch den Flugstromreaktor geführt werden, und wobei die Pyrolyse unter Ausschluss von Sauerstoff stattfindet.

## Beschreibung

Die Erfindung betrifft ein Verfahren zur Herstellung von Ruß aus Abfällen, einen Ruß, der nach dem Verfahren hergestellt ist, ein Verfahren zur Herstellung einer Kautschukmischung, eine Kautschukmischung enthaltend den Ruß sowie einen Fahrzeugreifen.

Es besteht ein immer größer werdender Bedarf nach geeigneten Recycling-Verfahren, um die Materialien von Produkten wie Fahrzeugreifen, insbesondere Altreifen, möglichst vollständig wieder verwenden zu können und zudem das Entsorgungsproblem zu lösen, welches mit auf Haltbarkeit ausgelegten technischen Gummiartikeln, wie Fahrzeugreifen, verbunden ist.
Es ist bekannt, dass Fahrzeugreifen, insbesondere Altreifen, mittels Pyrolyse entsorgt werden können. Hierbei entstehen als Produkte Pyrolyse-Ruß, Pyrolyse-Öl und Pyrolyse-Gase, wobei insbesondere Pyrolyse-Ruß als Füllstoff für frische Kautschukmischungen in Frage kommt.
Der Verwendung von Pyrolyse-Ruß in Kautschukmischungen für Neureifen sind jedoch durch die erzielten Eigenschaften des Rußes Grenzen gesetzt. Man ist nämlich grundsätzlich bestrebt, möglichst das Eigenschaftsbild der ASTM-Ruße, wie N660, zu erzielen bzw. keine signifikanten Nachteile der physikalischen Eigenschaften der Kautschukmischung enthaltend Pyrolyse-Ruß in Kauf nehmen zu müssen.

Der vorliegenden Erfindung liegt die Aufgabe zugrunde, ein Verfahren zur Herstellung von Ruß aus Abfällen bereitzustellen, durch welches ein Ruß mit einem gegenüber bekannten Pyrolyse-Rußen verbessertem Eigenschaftsbild erhalten wird bzw. in einer Kautschukmischung verbesserte Eigenschaften erzielt werden. Ferner sollten sich auch im Vergleich mit ASTM-Rußen, wie N660, keine starken Einbußen im Eigenschaftsbild der Kautschukmischung ergeben.
Das Verfahren soll zudem möglichst ökonomisch und ökologisch effizient sein.

Gelöst wird die Aufgabe dadurch, dass das Verfahren wenigstens die folgenden Verfahrensschritte umfasst:
A) Bereitstellung von Abfällen;
B) Zerkleinerung der Abfälle, wodurch Abfallpartikel erhalten werden;
C) Überführung der Abfallpartikel in einen Flugstromreaktor ("entrained flow reactor");
D) Pyrolyse der Abfallpartikel während der Verweilzeit der Abfallpartikel im Flugstromreaktor, wobei die Abfallpartikel durch den Flugstromreaktor geführt werden, und wobei die Pyrolyse unter Ausschluss von Sauerstoff stattfindet.

Überraschenderweise hat sich herausgestellt, dass mit dem erfindungsgemäßen Verfahren ein Ruß erhalten wird, mit dem insbesondere in einer Kautschukmischung gegenüber bekannten Pyrolyse-Rußen verbesserte Eigenschaften, wie insbesondere deren Ausvulkanisationszeit, erzielt werden. Die überraschenden Vorteile sind möglicherweise auf einen geringeren Anteil an Kohlenwasserstoffhaltigen Rückständen auf der Oberfläche der Ruß-Partikel zurückzuführen.
Durch das erfindungsgemäße Verfahren der Pyrolyse von zerkleinerten Abfällen im Flugstromreaktor findet nämlich eine Schnellpyrolyse, auch als "Flash-Pyrolyse" bezeichnet, statt. Möglicherweise wird hierdurch die Anlagerung von Kohlenwasserstoffen auf der Oberfläche der hergestellten Rußpartikel und deren anschließende Verkokung verhindert.
Die verbesserten Eigenschaften werden somit insbesondere gegenüber Rußen erzielt, die mittels langsamer Pyrolyse über mehrere Stunden hergestellt sind.
Ferner ergeben sich auch verbesserte Eigenschaften des erfindungsgemäß hergestellten Rußes gegenüber Rußen, die über Flash-Pyrolyse in anderen - im Stand der Technik bekannten - Reaktoren, wie Fließbettreaktoren ("fluidized bed reactor"), hergestellt wurden.

Im Folgenden wird die Erfindung weiter erläutert und weitere vorteilhafte Ausführungsformen beschrieben. Soweit nicht anders angegeben oder technisch nicht machbar, können verschiedene Ausführungsformen auch miteinander kombiniert werden.

Flugstromreaktoren sind dem Fachmann als Reaktoren für Verbrennungen bekannt. Sie umfassen ein zylinderförmiges Rohr, durch welches das zu verbrennende bzw. zu pyrolysierende Gut geführt wird und meist mittels eines Gasstroms geleitet wird. Bei senkrecht angeordnetem Reaktor fallen die Partikel aber bereits durch die Schwerkraft durch den Reaktor, wenn sie oben hineingegeben werden, sodass eine weitere aktive Führung nicht zwangsweise vorhanden sein muss.

Gemäß vorteilhafter Ausführungsformen der Erfindung umfasst der Flugstromreaktor ein zylinderförmiges Rohr mit einer Länge von 3000 bis 20000 mm, bevorzugt 5000 bis 10000 mm.
Je kürzer der Reaktor, desto geringer ist die Verweilzeit und somit die mögliche Reaktionszeit und damit die zur Verfügung stehende Zeit zur Pyrolyse.
Bei einem zu langen Reaktor steigt die Verweilzeit und es besteht die Möglichkeit, dass die Partikel unnötig lange beheizt werden, sodass unerwünschte Ablagerungen an der Oberfläche der entstandenen Rußpartikel entstehen.
Ferner kann der Fachmann die Geschwindigkeit der Partikel durch den Reaktor durch einen Gasstrom und dessen Geschwindigkeit beeinflussen und diese an die Reaktorlänge anpassen.

Gemäß vorteilhafter Ausführungsformen der Erfindung umfasst der Flugstromreaktor ein zylinderförmiges Rohr mit einem Durchmesser von 30 bis 500 mm, besonders bevorzugt 30 bis 100 mm, ganz besonders bevorzugt 30 bis 70 mm.
Bei zu kleinen Durchmessern ist die Kapazität des Reaktors zu gering. Bei zu großen Durchmessern besteht insbesondere die Herausforderung, einen ausreichenden und gleichmäßigen Wärmetransfer bis in die Mitte des Reaktors einzustellen.
Dem Fachmann sind diese Aspekte bekannt und er weiß die Geometrie des Reaktors und die Möglichkeiten des Wärmeeintrages aufeinander abzustimmen.

Bevorzugt beträgt die Verweilzeit in Schritt D) 0,1 bis 20 Sekunden, bevorzugt 1 bis 10 Sekunden.
Dadurch, dass die Verweilzeit nur bis zu 20 Sekunden, bevorzugt bis zu 10 Sekunden, beträgt, ist die Pyrolyse zum einen schnell und kosteneffizient abgeschlossen und zum anderen wird eine Verkokung der Oberfläche vermieden. Hierdurch werden Oberflächenveränderungen vermieden, die sich negativ auf die verstärkenden Eigenschaften in einer Kautschukmischung auswirken würden.

Es ist bevorzugt, dass die Pyrolyse in Schritt D) bei einer Temperatur von 450 bis 900 °C, besonders bevorzugt 600 bis 800 °C, ganz besonders bevorzugt 650 bis 800 °C, stattfindet. Insbesondere wird mit dem genannten Temperaturbereich ein Ruß erhalten, der im Vergleich zu bekannten Pyrolyse-Rußen eine aktivere Oberfläche aufweist. Hierdurch ermöglicht der erfindungsgemäß hergestellte Ruß eine verbesserte Verstärkung bei seiner Verwendung als verstärkender Füllstoff, wie in technischen Gummiartikeln und sonstigen Kunststoffen.
Mit dem genannten Temperaturbereich wird insbesondere ein Ruß erhalten, mit dem besonders gute Eigenschaften einer Kautschukmischung enthaltend den Ruß erzielt werden.

Die Pyrolyse findet unter Ausschluss von Sauerstoff statt. Hierzu wird bevorzugt Inertgas in einem konstanten Strom (Gasstrom) durch den Reaktor geleitet. Als Inertgas können insbesondere Stickstoff oder Edelgase wie Helium, Neon, Argon, verwendet werden. Bevorzugt wird Stickstoff (N₂) als Inertgas verwendet.

Besonders vorteilhaft ist es, wenn der Inertgasstrom in Richtung des Partikelstroms verläuft. Das Gewichts-Verhältnis von Gas zu Partikel beträgt dabei bevorzugt 1,5 bis 3:1, beispielsweise 2:1.
Prinzipiell ist es auch denkbar, dass der Inertgasstrom in entgegengesetzter Richtung zum Partikelstrom verläuft. Allerdings sollte die Geschwindigkeit, also der Volumenstrom des Intertgases nicht zu hoch sein, sodass die Partikel weiterhin gemäß der Schwerkraft von oben nach unten durch den Reaktor geführt werden können bzw. durch diesen fallen können.

Es ist bevorzugt, dass die Abfallpartikel aus Schritt B) eine Partikelgröße von 0,1 bis 5 mm, bevorzugt 0,1 bis 1 mm, beispielsweise bis zu 0,8 mm aufweisen, wobei insbesondere 90 Gew.-% (Gewichtsprozent) der Partikelgrößenverteilung (D90) unterhalb von 0,5 mm liegen.
Zu feine Partikel haben den Nachteil, dass sie aufwändiger bereitzustellen sind. Die Pyrolyse ist eine Möglichkeit der nachhaltigen Verwertung von Altreifen zu Produkten (Öl, Gas, Ruß), die einen hohen Weiterverwendungswert haben. Wenn der Energieaufwand für die Vermahlung der Altreifen zu "extrem" kleinen Partikeln größer ist als der Energieeintrag für die Herstellung von Ruß über Rohöl ist der Prozess nicht mehr nachhaltig. Dementsprechend würde die Pyrolyse bei zu feinen Partikeln ihre Nachhaltigkeit verlieren.

Bei zu großen Partikeln besteht das Problem, dass die Pyrolyse während der kurzen Verweilzeit im Reaktor nicht ausreichend stattfindet.
Daher ist der Bereich von 0,1 bis 5 mm bevorzugt. Grundsätzlich sind in diesem Bereich kleinere Partikel, insbesondere mit einer Partikelgröße von 0,1 bis 1 mm, besonders bevorzugt, da hierdurch ein geringerer Energieeintrag und damit eine niedrigere Temperatur nötig ist, um die Partikel vollständig durch zu pyrolysieren.

Die Bestimmung der Partikelgröße erfolgt im Rahmen der vorliegenden Erfindung durch Siebanalyse; Siebrückstand gemäß Alpine-Luftstahlsieb-Verfahren, DIN EN ISO 4610, Test-Methode 1.3-014/3.

Bevorzugt erfolgt die Überführung der zerkleinerten Abfälle in Schritt C) mittels eines Extruders, besonders bevorzugt eines Doppelschneckenextruders. Hierdurch ist eine gleichmäßige Fütterrate der Abfälle in den Reaktor besonders gut gewährleistet.

Bevorzugt beträgt die Fütterrate der Abfälle in den Reaktor in Schritt C) 0,5 bis 5 kg/h, besonders bevorzugt 0,5 bis 3 kg/h, ganz besonders bevorzugt 0,5 bis 1,5 kg/h. Wenn die Fütterrate zu hoch ist, insbesondere 5 kg/h überschreitet, ist eine vollständige Pyrolyse nicht sichergestellt.

Bevorzugt umfassen die Abfälle Kunststoffe, bevorzugt Fahrzeugreifen und/oder andere technische Kautschukartikel.
Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.
Bevorzugt werden derartige Fahrzeugreifen verwendet, die einen vergleichsweise geringen Anteil an Kieselsäure (Silikat haltigen) Füllstoffen aufweisen, da somit auch der Asche-Gehalt des hergestellten Rußes geringer ausfällt.

Bevorzugt werden Fahrzeugreifen verwendet, die einen Gesamtkieselsäuregehalt von 0 bis zu 15 Gew.-% bezogen auf das Gesamtgewicht des Reifens aufweisen.
Gemäß vorteilhafter Ausführungsformen der Erfindung werden Fahrzeugreifen verwendet, die einen Gesamtkieselsäuregehalt von 2 bis 6 Gew.-% bezogen auf das Gesamtgewicht des Reifens aufweisen. Hierbei handelt es sich insbesondere um Nutzfahrzeugreifen, die im Vergleich zu PKW-Reifen meist einen geringeren Anteil an Kieselsäure aufweisen.

Der erfindungsgemäß hergestellte Ruß wird bevorzugt am unteren Ende des Flugstromreaktors aufgefangen, wobei auch hier bevorzugt ein Inertgasstrom - bevorzugt in Richtung des Partikelstroms - konstant weitergeführt wird.
Das Auffangen erfolgt bevorzugt über geeignete Auffangbehälter, wie Rußauffangbehälter (*engl*. "knockout char pot").
Ferner werden feinere Partikel, die ggf. über den Inertgasstrom weitergetragen werden, bevorzugt mittels eines Systems aus Zyklonabscheidern abgetrennt, welches bevorzugt erwärmt ist, insbesondere auf Temperaturen von 350 bis 550 °C, bevorzugt 350 bis 450 °C, ganz besonders bevorzugt 350 bis 400 °C, um ein Kondensieren von flüchtigen Verbindungen, inklusive entstandenem Pyrolyse-Öl, auf den erhaltenen Ruß-Partikeln zu verhindern.
Bei der Pyrolyse ebenfalls entstehende Pyrolyse-Gase und Pyrolyse-Öle werden bevorzugt durch den Gasstrom aus der Vorrichtung ausgetragen.

Der aufgefangene Ruß wird optional aufgereinigt. Beispielsweise und bevorzugt kann diese Aufreinigung, insbesondere im industriellen Maßstab, durch Mahlen und anschließendes Pelletieren erfolgen. Das Mahlen dient insbesondere dazu, das Eigenschaftsprofil weiter zu verbessern. Geeignete Vorrichtungen hierfür sind insbesondere Strahlmühlen (engl. "jet mill").

Ferner ist es denkbar, dass der erhaltene Ruß in weiteren Verfahrensschritten ein weiteres Mal durch einen Reaktor geleitet wird, um eine weitere Pyrolyse im Rahmen einer Nachbehandlung ggf. bei höheren Temperaturen stattfinden zu lassen.

Ein weiterer Gegenstand der vorliegenden Erfindung ist ein Ruß, der nach dem erfindungsgemäßen Verfahren hergestellt ist. Die mit dem erfindungsgemäßen Ruß verbundenen Vorteile sind oben im Zusammenhang mit dem erfindungsgemäßen Verfahren bereits ausgeführt.

Bevorzugt weist der erfindungsgemäße Ruß einen Kohlenstoffgehalt von 70 bis 92 Gew.-% auf.

Gemäß vorteilhafter Ausführungsformen der Erfindung beträgt der Kohlenstoffgehalt 70 bis 75 Gew.-%. Hiermit werden besonders gute Eigenschaften der Kautschukmischung enthaltend den Ruß erzielt, insbesondere eine vergleichsweise gute Verstärkung und Robustheit gegenüber Rissinitiierung.

Gemäß weiterer vorteilhafter Ausführungsformen beträgt der Kohlenstoffgehalt 80 bis 92 Gew.-%. Ein Ruß mit einem derartigen Kohlenstoffgehalt weist einen vergleichsweise geringen Asche-Gehalt auf. Hierdurch ergeben sich in einer Kautschukmischung eine noch höhere Verstärkung der Kautschukmatrix, sowie eine weiter verbesserte Robustheit gegenüber Rissinitiierung und eine höhere Zugfestigkeit.

Bevorzugt weist der erfindungsgemäße Ruß einen Wasserstoffgehalt von 0,2 bis 0,6 Gew.-% auf.

Die Bestimmung des Kohlenstoffgehalts und des Wasserstoffgehalts erfolgt im Rahmen der vorliegenden Erfindung gemäß Elementaranalyse. Hierbei wird ein SEM ("scanning electron microscope"), Jeol JSM 6400, verwendet, welches mit einem energiedispersiven Röntgenanalysator (SEM-EDX) versehen ist. Zur Probenvorbereitung wird der zu untersuchende Ruß auf einen Metallträger geklebt. Nach dem Trocknen des Klebstoffs werden nicht anhaftende Partikel durch Druckluft entfernt und die Proben anschließend bei 100 °C für 24 Stunden zur Entgasung in einem Ofen gelagert.

Bevorzugt weist der erfindungsgemäße Ruß eine Ölzahl (OAN) gemäß ASTM D2414 von 80 bis 100 ml/100 g eine Iodadsorptionszahl (IAN) gemäß ASTM D 1510 von 80 bis 100 mg/g auf.

Hierdurch wird in einer Kautschukmischung eine ausreichende Verstärkung erzielt, was sich vorteilhaft auf die Steifigkeit und die Zugfestigkeit sowie das Abriebverhalten der Kautschukmischung auswirkt.

Ein weiterer Gegenstand der vorliegenden Erfindung ist eine Kautschukmischung, welche wenigstens einen Kautschuk und wenigstens einen erfindungsgemäß hergestellten bzw. wenigstens einen erfindungsgemäßen Ruß enthält.
Bevorzugt ist der Ruß in Mengen von 10 bis 150 phr, besonders bevorzugt in Mengen von 20 bis 60 phr, in der erfindungsgemäßen Kautschukmischung enthalten.

Ein weiterer Gegenstand der vorliegenden Erfindung ist ein Vulkanisat wenigstens einer erfindungsgemäßen Kautschukmischung.
Dem Fachmann ist bekannt, dass die meisten Substanzen, wie z. B. die enthaltenen Kautschuke entweder bereits nach dem Mischen oder erst nach der Vulkanisation in chemisch veränderter Form vorliegen oder vorliegen können.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Hierbei ist die Anwendung in allen Reifenbauteilen prinzipiell denkbar, wie in einem Laufstreifen, insbesondere in der Cap eines Laufstreifens mit Cap/Base-Konstruktion, und/oder der Seitenwand, und/oder der Innenschicht, auch als "Innerliner" bezeichnet, und/oder einem sonstigen inneren Reifenbauteil, welches auch Festigkeitsträger umfassen kann.

Im Folgenden werden Bestandteile der erfindungsgemäßen Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens einem Bauteil aufweist.

Von der Erfindung sind sämtliche vorteilhafte Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben; sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die erfindungsgemäße Kautschukmischung enthält wenigstens einen Kautschuk. Prinzipiell sind hiervon jegliche Kautschuke umfasst, die mit Ruß zu einer Kautschukmischung vermischt werden können.

Bevorzugt umfasst der wenigstens eine Kautschuk wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Der Dienkautschuk ist dabei bevorzugt ausgewählt aus der Gruppe bestehend aus natürlichem Polyisopren (Naturkautschuk, NR), synthetischem Polyisopren (IR), epoxidiertem Polyisopren, Butadien-Kautschuk (BR), Butadien-Isopren-Kautschuk, lösungspolymerisiertem Styrol-Butadien-Kautschuk (SSBR), emulsionspolymerisiertem Styrol-Butadien-Kautschuk (ESBR), Styrol-Isopren-Kautschuk, Flüssigkautschuken mit einem Molekulargewicht Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Gemäß vorteilhafter Ausführungsformen ist der Dienkautschuk, insbesondere bei der Verwendung der Kautschukmischung in Fahrzeugreifen, ausgewählt aus der Gruppe bestehend aus natürlichem Polyisopren (Naturkautschuk, NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß vorteilhafter Ausführungsformen der Erfindung enthält die Kautschukmischung neben dem erfindungsgemäß enthaltenen Ruß wenigstens einen weiteren Füllstoff, der ausgewählt ist aus der Gruppe bestehend aus Industrierußen und Kieselsäuren.

Gemäß einer bevorzugten Ausführungsform der Erfindung enthält die Kautschukmischung wenigstens einen Industrieruß, bevorzugt in Mengen von 2 bis 50 phr, besonders bevorzugt 2 bis 30 phr, ganz besonders bevorzugt 10 bis 30 phr.

Als Industrieruße kommen alle der fachkundigen Person bekannten Rußtypen in Frage, wie insbesondere die ASTM Ruße nach der ASTM D 1765.
Gemäß vorteilhafter Ausführungsformen hat der Industrieruß eine Iodadsorptionszahl (IAN) gemäß ASTM D 1510 zwischen 20 und 250 mg/g, bevorzugt 20 bis 180 mg/g, besonders bevorzugt 20 bis 90 mg/g, und ganz besonders bevorzugt 20 bis 50 mg/g, und eine Ölzahl (OAN) gemäß ASTM D 2414 von 30 bis 200 ml/100 g, bevorzugt 70 bis 200 ml/100g, besonders bevorzugt 70 bis 110 ml/100g. Beispielsweise und bevorzugt ist gemäß vorteilhafter Ausführungsformen ein Ruß des Typs N 660 enthalten.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Die Begriffe "Kieselsäure" und "Silika" werden im Rahmen der vorliegenden Erfindung synonym verwendet.

Die erfindungsgemäße Kautschukmischung kann zudem weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. Diamine, wie N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD), oder Dihydrochinoline, wie 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Aktivatoren und/oder Agenzien für die Anbindung von Füllstoffen, insbesondere Ruß oder Kieselsäure, wie beispielsweise S-(3-Aminopropyl)Thioschwefelsäure und/oder deren Metallsalze (Anbindung an Ruß) sowie Silan-Kupplungsagenzien (Anbindung an Kieselsäure),
d) Ozonschutzwachse,
e) Harze, insbesondere Klebharze für innere Reifenbauteile,
f) Mastikationshilfsmittel, wie z. B. 2,2'-Dibenzamidodiphenyldisulfid (DBD) und
g) Prozesshilfsmittel, wie insbesondere Fettsäureester und Metallseifen, wie z.B. Zinkseifen und/oder Calciumseifen
h) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt.
Bei der Verwendung von Mineralöl ist dieses bevorzugt ausgewählt aus der Gruppe, bestehend aus DAE (Destillated Aromatic Extracts), RAE (Residual Aromatic Extract), TDAE (Treated Destillated Aromatic Extracts), MES (Mild Extracted Solvents) und naphthenischen Ölen.

Der Mengenanteil der Gesamtmenge an weiteren Zusatzstoffen beträgt bevorzugt 3 bis 150 phr, besonders bevorzugt 3 bis 100 phr und ganz besonders bevorzugt 5 bis 80 phr. Im Gesamtmengenanteil der weiteren Zusatzstoffe kann Zinkoxid (ZnO) in den oben genannten Mengen enthalten sein.
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die erfindungsgemäße Kautschukmischung wird bevorzugt vulkanisiert verwendet, insbesondere in Fahrzeugreifen oder anderen vulkanisierten technischen Gummiartikeln.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS) und Guanidin-Beschleunigern wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus Thiuramdisulfiden, wie z.B. Tetrabenzylthiuramdisulfid (TBzTD) und/oder Tetramethylthiuramdisulfid (TMTD) und/oder Tetraethylthiuramdisulfid (TETD), Thiuramtetrasulfiden, wie z.B. Dipentamethylenthiuramtetrasulfid (DPTT), Dithiophosphaten, wie z.B.
DipDis (Bis-(Diisopropyl)thiophosphoryldisulfid) und/oder
Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat,
1,6-Bis(N,N-dibenzylthiocarbamoyldithio)hexan, Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Besonders bevorzugt ist die Verwendung der Beschleuniger TBBS und/oder CBS und/oder Diphenylguanidin (DPG).
Außerdem können in der Kautschukmischung Vulkanisationsverzögerer vorhanden sein.

Ein weiterer Gegenstand der vorliegenden Erfindung ist ein Verfahren zur Herstellung einer Kautschukmischung, insbesondere für Fahrzeugreifen.
Das erfindungsgemäße Verfahren ist dadurch gekennzeichnet, dass der erfindungsgemäß hergestellte Ruß bzw. der erfindungsgemäße Ruß mit den genannten bevorzugten Eigenschaften in wenigstens einer Mischstufe, bevorzugt in einer Menge von 10 bis 150 phr, zugegeben wird.
Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht Mw gemäß GPC von größer als 20000 g/mol.
Für das erfindungsgemäß Verfahren bedeutet die Angabe daher, dass bevorzugt 10 bis 150 phr erfindungsgemäßer Ruß bezogen auf die Gesamtzusammensetzung nach erfolgter Herstellung der Kautschukmischung nach allen Schritten verwendet zugegeben werden.

Das erfindungsgemäße Verfahren zur Herstellung einer Kautschukmischung kann auch als Weiterführung des erfindungsgemäßen Verfahrens zur Herstellung von Ruß formuliert werden, in dem sich zeitlich an die Schritte A) bis D) wenigstes ein Verfahrensschritt anschließt, der die Zugabe des hergestellten Rußes zu einem Kautschuk vorsieht. Bevorzugt ist der Verfahrensschritt eine Grundmischstufe bei der Herstellung der Kautschukmischung. Die Herstellung der Kautschukmischung erfolgt ansonsten nach dem in der Kautschukindustrie üblichen Verfahren, bei dem zunächst in ein oder mehreren Mischstufen eine Grundmischung mit allen Bestandteilen außer dem Vulkanisationssystem (z. B. Schwefel und vulkanisationsbeeinflussende Substanzen im Fall der Schwefelvulkanisation) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation.

Die Begriffe "vulkanisiert" und "vernetzt" werden im Rahmen der vorliegenden Erfindung synonym verwendet.

Die oben beschriebene erfindungsgemäße Kautschukmischung ist besonders für die Verwendung in Fahrzeugreifen, insbesondere Fahrzeugluftreifen geeignet.
Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.
Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.
Als Body-Mischung werden hierbei die Kautschukmischungen für die inneren Bauteile eines Reifen bezeichnet, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage. Der noch unvulkanisierte Reifenrohling wird anschließend vulkanisiert.
Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen näher erläutert werden.

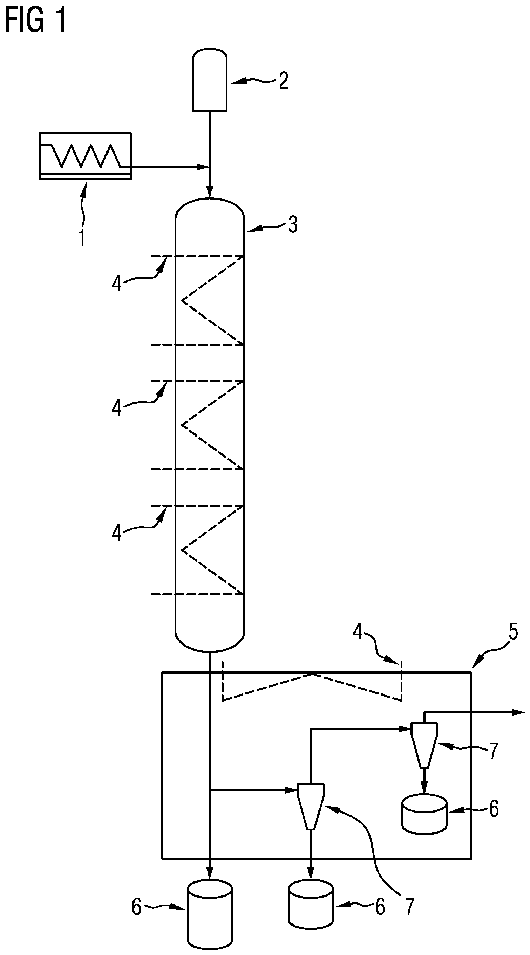

Zunächst wurden erfindungsgemäße Ruße nach dem erfindungsgemäßen Verfahren hergestellt. Eine schematische Darstellung des Ablaufes bzw. der Vorrichtung ist in Fig. 1 gezeigt.

Gemäß Schritt A) wurden Abfälle in Form von PKW-Fahrzeugreifen bereitgestellt.
Diese wurden gemäß Schritt B) zu Partikeln zerkleinert, wobei Partikel mit einer Partikelgröße von bis zu 800 µm erhalten wurden und wobei 90 Gew.-% (Gewichtsprozent) der Partikelgrößenverteilung (D90) unterhalb von 500 µm lagen.
Die zerkleinerten Partikel wurden gemäß Schritt C) mittels eines Doppelschneckenextruders 1 mit einer Fütterrate von 1 kg/h in einen senkrecht angeordneten Flugstromreaktor ("entrained flow reactor") 3 überführt. Der Flugstromreaktor umfasst ein zylinderförmiges Rohr aus Stahl ("stainless steel 316") mit einer Länge von 4200 mm und einem Durchmesser von 50 mm, wobei der Reaktor ein oberes Ende und ein unteres Ende aufweist.

Die Partikel wurden von oben nach unten durch den Reaktor geführt. Hierbei wurde Stickstoff in einem Stickstofftank 2 bereitgestellt und Stickstoff ebenfalls von oben nach unten mit einem konstanten Volumenstrom von 26 L/min durch den Reaktor geleitet. Das Verhältnis von Gas zu Feststoffen (eingespeiste Partikel) betrug 2:1.
Der Reaktor weist drei Heizzonen auf, welche elektrisch mit Hochtemperaturheizspulen 4 beheizbar sind. Die obere Heizzone ist mit einer 9 m Heizspule mit einer Leistung von 2300 W ausgestattet. Die mittlere und die untere Heizzone sind jeweils mit einer 12 m Heizspule mit einer Leistung von 2870 W ausgestattet.
Die einzelnen Heizzonen können separat über ein K-Typ-Thermoelement kontrolliert werden, welches mittig in der mittleren Heizzone, im Mittelpunkt des Zylinders, angeordnet ist. Damit konnte die Temperatur über die gesamte Länge des Zylinders akkurat kontrolliert und Temperaturschwankungen vermieden werden. Zur Überwachung des Temperaturprofils innerhalb des Reaktors sind mehrere weitere K-Typ-Thermoelemente entlang der Länge des Zylinders angeordnet.
Während der Verweilzeit der Abfallpartikel in dem Reaktor fand gemäß Schritt D) die Pyrolyse bei einer Temperatur von 700 °C unter Ausschluss von Sauerstoff statt.

Es wurden zwei Ruße hergestellt: Ein erster Ruß, im folgenden R1 genannt, wurde dadurch erhalten, dass das Verfahren wie vorstehend beschrieben durchgeführt wurde, wobei die Verweilzeit 4 Sekunden betrug.
Ein zweiter Ruß, im folgenden R2 genannt, wurde dadurch erhalten, dass ebenfalls das Verfahren wie für R1 durchgeführt wurde, allerdings der entstandene Ruß im Anschluss ein weiteres Mal durch den Reaktor geführt wurde, sodass sich insgesamt eine Verweilzeit von 8 Sekunden ergab.

Die Ruße wurden unterhalb des Reaktors in Rußauffangbehältern (*engl*. "knockout char pot") 6 aufgefangen, wobei der konstante Stickstoffstrom durch die Folgevorrichtungen weitergeführt wurde. Feinere Partikel, die aufgrund des Stickstoffstroms aus dem ersten Rußauffangbehälter mit ausgetragen wurden, wurden mittels zwei Zyklonabscheidern 7 ("cyclonic separators") von dem Gas getrennt und jeweils in einem Behälter unterhalb jedes Zyklonabscheiders aufgefangen.
Das System aus Zyklonabscheidern 7 war innerhalb eines Ofens 5 angeordnet, wobei mittels einer weiteren Heizspule 4 eine Temperatur von 400 °C gehalten wurde um ein Kondensieren von flüchtigen Verbindungen, inklusive entstandenem Pyrolyse-Öl, auf den erhaltenen Ruß-Partikeln zu verhindern.

Im Falle des Rußes R2 wurden die Ruß-Partikel nach der ersten Verweilzeit im Reaktor aus allen Rußauffangbehältern gesammelt und miteinander vermischt und ein weiteres Mal in den Reaktor gegeben. Die Partikel der unterschiedlichen Behälter unterschieden sich lediglich in der Partikelgrößenverteilung.

Ebenfalls entstehende Pyrolyse-Gase und Pyrolyse-Öle wurden in Pfeilrichtung aus der Vorrichtung ausgetragen bzw. in weiteren Vorrichtungen aufgefangen und verarbeitet. Für die vorliegende Erfindung ist dies nicht relevant, weswegen diese weiteren Vorrichtungen in Fig. 1 nicht dargestellt sind.

Die Eigenschaften der erfindungsgemäß hergestellten Ruße R1 und R2 sind in Tabelle 1 zusammengefasst.

**Tabelle 1**

| **Eigenschaften** | **Einheit** | **R1** | **R2** |
|---|---|---|---|
| **Näherungsanalyse ("proximate analysis")** | | | |
| Feuchtigkeitsgehalt | Gew.-% | < 0,5 | < 0,5 |
| Gehalt an flüchtigen Verbindungen | Gew.-% | 3,75 | 2,2 |
| Asche-Gehalt | Gew.-% | 25 | 25 |

| **Elementaranalyse ("ultimate analysis")** | | | |
|---|---|---|---|
| C | Gew.-% | 73 | 73 |
| H | Gew.-% | 0,6 | 0,4 |
| N | Gew.-% | 0,3 | 0,2 |
| Rest | Gew.-% | 26 | 26 |

| **Sonstige Eigenschaften** | | | |
|---|---|---|---|
| OAN | ml/100g | 83,6 | |
| IAN | mg/g | 95,2 | |

Dabei wurden die Proben folgendermaßen untersucht:
Der Gehalt an flüchtigen Verbindungen wurde mittels Thermogravimetrischer Analyse (TGA) bestimmt. Hierzu wurden die Rußproben unter Inertgas auf 650 °C erhitzt und kontinuierlich gewogen. Die flüchtigen Verbindungen begannen sich ab einer Temperatur von ca. 250 °C von der Oberfläche zu lösen, während ab einer Temperatur von 650 °C keine weitere signifikante Ablösung zu beobachten war.
Der Asche-Gehalt wurde mittels Röntgenfluoreszenzanalyse (RFA) anhand der Restfraktionen der Pyrolyse-Ruße bestimmt.

Die Elementaranalyse zur Bestimmung von Kohlenstoff (C), Wasserstoff (H) und Stickstoff (N) und die Bestimmung von IAN und OAN erfolgten wie oben beschrieben.

Die Ruße R1 und R2 wurden jeweils in Kautschukmischungen eingemischt und deren physikalische Eigenschaften bestimmt.

Die Zusammensetzung ist allgemein in Tabelle 2 angegeben.

**Tabelle 2**

| **Bestandteile** | **Menge [phr]** |
|---|---|
| SSBR | 100 |
| Ruß | 40 oder 60 |
| Alterungsschutzmittel ^{a)} | 3,5 |
| Ozonschutzwachs | 2,5 |
| Zinkoxid | 3,0 |
| Stearinsäure | 2,0 |
| TBBS | 0,7 |
| Schwefel | 1,65 |

| | |
|---|---|
| a) 1,0 phr DTPD, 1,5 phr 6PPD, 1,0 phr TMQ | |

Die Mischungsherstellung erfolgte nach dem in der Kautschukindustrie üblichen Verfahren unter üblichen Bedingungen in drei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und TBBS) für 200 bis 600 Sekunden bei 145 bis 165 °C, Zieltemperaturen von 152 bis 157 °C, vermischt wurden. In der zweiten Stufe wurde die Mischung aus Stufe 1 noch einmal durchmischt, es wurde ein sogenannter Remill durchgeführt. Durch Zugabe des Vulkanisationssystems in der dritten Stufe (Fertigmischstufe) wurde die Fertigmischung erzeugt, wobei für 180 bis 300 Sekunden bei 90 bis 120 °C gemischt wurde.
Dabei wurden die Ruße R1 und R2 in der ersten Grundmischstufe zugegeben.

Aus sämtlichen Mischungen wurden Prüfkörper durch Vulkanisation nach t₉₅ bis t₁₀₀ (gemessen am Moving Die Rheometer gemäß ASTM D 5289-12/ ISO 6502) unter Druck bei 160°C bis 170 °C hergestellt und mit diesen Prüfkörpern für die Kautschukindustrie typische Materialeigenschaften mit den im Folgenden angegebenen Testverfahren ermittelt.
- Umsatzzeiten von 90% Umsatz (t₉₀, Ausvulkanisationszeit) gemäß ASTM D 5289-12/ ISO 6502, s. oben
- Shore Härte bei Raumtemperatur (RT) gemäß ISO 868, DIN 53 505
- Rückprallelastizität bei 70°C gemäß DIN 53 512 und ISO 4662
- Zugfestigkeit und Bruchdehnung sowie Spannungswert bei 100 % (M100) bei Raumtemperatur gemäß DIN 53 504
- Abrieb bei Raumtemperatur gemäß DIN/ISO 4649

In Tabelle 3 sind die Ergebnisse für 40 phr zusammengefasst, wobei die erfindungsgemäßen Kautschukmischungen E1 und E2 die Ruße R1 bzw. R2 enthalten und die mit "V" gekennzeichneten Vergleichsmischungen Ruße aus dem Stand der Technik wie angegeben.

**Tabelle 3**

| | | V1 | V2 | V3 | E1 | E2 |
|---|---|---|---|---|---|---|
| 40 phr Ruß | | N660 | N550 | pyCB ^{b)} | R1 | R2 |

| **Eigenschaften** | **Einheit** | | | | | |
|---|---|---|---|---|---|---|
| t₉₀ | min | 16,7 | 18,1 | 16,8 | 14,9 | 14,5 |
| Shore Härte RT | Shore A | 56,1 | 58,5 | 53,8 | 51,1 | 53 |
| Rückprallelastizität 70 °C | % | 66,4 | 64,7 | 64,5 | 64,2 | 64,3 |
| DIN Abrieb | mm³ | 135 | 128 | 164 | 167 | 156 |
| M100 | MPa | 1,7 | 2,0 | 1,4 | 1,2 | 1,4 |

| | | | | | | |
|---|---|---|---|---|---|---|
| b) Pyrolyse-Ruß, welcher nicht mittels Schnellpyrolyse hergestellt wurde, ElastX^{™} cct-6400, Fa. Pyrolyx AG | | | | | | |

In Tabelle 4 sind die Ergebnisse für 60 phr zusammengefasst, wobei die erfindungsgemäßen Kautschukmischungen E3 und E4 die Ruße R1 bzw. R2 enthalten und die mit "V" gekennzeichneten Vergleichsmischungen Ruße aus dem Stand der Technik wie angegeben.

**Tabelle 4**

| | | V4 | V5 | V6 | E3 | E4 |
|---|---|---|---|---|---|---|
| 60 phr Ruß | | N660 | N550 | pyCB ^{b)} | R1 | R2 |

| **Eigenschaften** | **Einheit** | | | | | |
|---|---|---|---|---|---|---|
| t₉₀ | min | 15,7 | 14,3 | 18,1 | 14,6 | 14,3 |
| Shore Härte RT | Shore A | 66 | 69,9 | 61,7 | 57,2 | 59,2 |
| Rückprallelastizität 70 °C | % | 60,8 | 57,8 | 59,6 | 59,7 | 60,4 |
| DIN Abrieb | mm³ | 121 | 108 | 151 | 163 | 146 |
| M100 | MPa | 3,1 | 4 | 2,2 | 1,7 | 2 |

Wie an den Tabellen 3 und 4 erkennbar, wird mit den erfindungsgemäße hergestellten Rußen R1 und R2 überraschenderweise eine Verringerung der Ausvulkanisationszeit t₉₀ erzielt. Die erfindungsgemäßen Kautschukmischungen lassen sich somit energiesparend und effizient herstellen. Dieser Vorteil tritt sowohl gegenüber Standard ASTM Rußen N660 sowie N550 als auch gegenüber einem Pyrolyse-Ruß aus dem Stand der Technik, welcher nicht mit dem erfindungsgemäßen Verfahren hergestellt wurde.
Gleichzeitig bleiben die sonstigen Eigenschaften insbesondere gegenüber einem Pyrolyse-Ruß aus dem Stand der Technik auf einem vergleichbaren Niveau.

Ferner wurden Versuche in einer Kautschukmischung für den Innerliner von Fahrzeugluftreifen durchgeführt. Die allgemeine Zusammensetzung ist in Tabelle 5 angegeben.

**Tabelle 5**

| **Bestandteile** | **Menge [phr]** |
|---|---|
| NR | 15 |
| SBR | 20 |
| IR | 65 |
| Ruß | variiert |
| Öl | 10 |
| Prozesshilfsmittel | 7 |
| Kaolin | 50 |
| Beschleuniger | 6,2 |
| Schwefel | 1 |

Die Ergebnisse sind in Tabelle 6 zusammengefasst.
Wie an Tabelle 6 erkennbar, wird auch hier mit den erfindungsgemäß hergestellten Rußen R1 und R2 überraschenderweise eine Verringerung der Ausvulkanisationszeit t₉₀ erzielt. Gleichzeitig weisen die erfindungsgemäßen Kautschukmischungen verbesserte Rückprallelastizitäten bei 70 °C und damit verbesserte Rollwiderstandsindikatoren sowie verbesserte Zugfestigkeiten und Bruchdehnungen auf. Die Vorteile sind insbesondere gegenüber einer Kautschukmischung enthaltend Pyrolyse-Ruß, welcher nicht mittels Schnellpyrolyse hergestellt wurde, erkennbar.

**Tabelle 6**

| **Ruße** | **Einheit** | V7 | V8 | V9 | E5 | E6 |
|---|---|---|---|---|---|---|
| N660 | phr | 55 | - | 22 | 22 | 22 |
| N550 | phr | - | 55 | - | - | - |
| pyCB ^{b)} | phr | - | - | 33 | - | - |
| R1 | phr | - | - | - | 33 | - |
| R2 | phr | - | - | - | - | 33 |

| **Eigenschaften** | **Einheit** | | | | | |
|---|---|---|---|---|---|---|
| t₉₀ | min | 20,1 | 19,7 | 19,7 | 17,0 | 16,6 |
| Shore Härte RT | Shore A | 59,3 | 63,3 | 57,4 | 56,3 | 58 |
| Rückprallelastizität 70 °C | % | 34,4 | 33,8 | 36,3 | 37,8 | 36,8 |
| Zugfestigkeit | MPa | 6,3 | 6,5 | 5,6 | 6,2 | 6,0 |
| Bruchdehnung | % | 618,5 | 555 | 535 | 612 | 575 |
| M100 | MPa | 1,7 | 1,9 | 1,5 | 1,4 | 1,5 |

### Bezugszeichenliste (Teil der Beschreibung)

- 1: Doppelschneckenextruder
- 2: Stickstofftank
- 3: Zylinderförmiger Reaktor
- 4: Heizspulen
- 5: Ofen
- 6: Rußauffangbehälter
- 7: Zyklonabscheider

## Patentansprüche

1. Verfahren zur Herstellung von Ruß aus Abfällen, umfassend wenigstens die folgenden Verfahrensschritte:
A) Bereitstellung von Abfällen;
B) Zerkleinerung der Abfälle, wodurch Abfallpartikel erhalten werden;
C) Überführung der Abfallpartikel in einen Flugstromreaktor ("entrained flow reactor");
D) Pyrolyse der Abfallpartikel während der Verweilzeit der Abfallpartikel im Flugstromreaktor, wobei die Abfallpartikel durch den Flugstromreaktor geführt werden, und wobei die Pyrolyse unter Ausschluss von Sauerstoff stattfindet.

2. Verfahren nach Anspruch 1, **dadurch gekennzeichnet, dass** die Verweilzeit in Schritt D) 0,1 bis 20 Sekunden, bevorzugt 1 bis 10 Sekunden, beträgt.

3. Verfahren nach einem der vorherigen Ansprüche, **dadurch**
**gekennzeichnet, dass** die Pyrolyse in Schritt D) bei einer Temperatur von 450 bis 900 °C, bevorzugt 600 bis 800 °C, wiederum bevorzugt 650 bis 800 °C, stattfindet.

4. Verfahren nach einem der vorherigen Ansprüche, **dadurch**
**gekennzeichnet, dass** die Abfallpartikel aus Schritt B) eine Partikelgröße von 0,1 bis 5 mm, bevorzugt 0,1 bis 1 mm aufweisen.

5. Verfahren nach einem der vorherigen Ansprüche, **dadurch**
**gekennzeichnet, dass** die Überführung der zerkleinerten Abfälle in Schritt C) mittels eines Extruders erfolgt.

6. Verfahren nach einem der vorherigen Ansprüche, **dadurch**
**gekennzeichnet, dass** die Abfälle Kunststoffe, bevorzugt Fahrzeugreifen und/oder andere technische Kautschukartikel, umfassen.

7. Ruß, der nach einem Verfahren gemäß einem der Ansprüche 1 bis 6 hergestellt wurde.

8. Ruß nach Anspruch 7, **dadurch gekennzeichnet, dass** er gemäß Elementaranalyse einen Kohlenstoffgehalt von 70 bis 92 Gew.-%, einen Wasserstoffgehalt von 0,2 bis 0,6 Gew.-% aufweist.

9. Ruß nach einem der Ansprüche 7 oder 8, **dadurch gekennzeichnet, dass** er eine Ölzahl (OAN) gemäß ASTM D2414 von 80 bis 100 ml/100 g und eine Iodadsorptionszahl (IAN) gemäß ASTM D 1510 von 80 bis 100 mg/g aufweist.

10. Verfahren zur Herstellung einer Kautschukmischung, **dadurch**
**gekennzeichnet, dass** der gemäß dem Verfahren nach einem der Ansprüche 1 bis 6 hergestellte Ruß in wenigstens einer Mischstufe, bevorzugt in einer Menge von 10 bis 150 phr, zugegeben wird.

11. Kautschukmischung enthaltend wenigstens einen Kautschuk und wenigstens einen Ruß nach einem der Ansprüche 7 bis 9.

12. Vulkanisat, welches durch die Schwefelvulkanisation wenigstens einer Kautschukmischung nach Anspruch 11 erhalten ist.

13. Fahrzeugreifen, der in wenigstens einem Bauteil wenigstens einen Ruß nach einem der Ansprüche 7 bis 9 und/oder wenigstens ein Vulkanisat nach Anspruch 12 aufweist.
